(19) Europäisches Patentamt
European Patent Office
Office européen des brevets

(11) EP 4 038 137 B1

(12) # EUROPEAN PATENT SPECIFICATION

(45) Date of publication and mention of the grant of the patent:
**12.07.2023 Bulletin 2023/28**

(21) Application number: **20780203.4**

(22) Date of filing: **30.09.2020**

(51) International Patent Classification (IPC):
***C08L 23/14*** *(2006.01)* ***C08L 23/12*** *(2006.01)*

(52) Cooperative Patent Classification (CPC):
(C-Sets available)
**C08L 23/12;** C08L 2203/162; C08L 2207/066

(Cont.)

(86) International application number:
**PCT/EP2020/077284**

(87) International publication number:
**WO 2021/063974 (08.04.2021 Gazette 2021/14)**

(54) **POLYMER COMPOSITION SUITABLE FOR MAKING BLOWN FILMS**
POLYMERZUSAMMENSETZUNG ZUR HERSTELLUNG VON BLASFOLIEN
COMPOSITION POLYMÈRE ADAPTÉE À LA FABRICATION DE FILMS SOUFFLÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2019 EP 19200680**

(43) Date of publication of application:
**10.08.2022 Bulletin 2022/32**

(73) Proprietor: **Borealis AG**
**1020 Vienna (AT)**

(72) Inventors:
- **WANG, Jingbo**
**4021 Linz (AT)**
- **GAHLEITNER, Markus**
**4021 Linz (AT)**
- **BERNREITNER, Klaus**
**4021 Linz (AT)**
- **LESKINEN, Pauli**
**06101 Porvoo (FI)**

(74) Representative: **Dehns**
**St. Bride's House**
**10 Salisbury Square**
**London EC4Y 8JD (GB)**

(56) References cited:
**EP-A1- 3 031 849** **WO-A1-2019/002268**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/0815**

## Description

The present invention relates to a polymer composition comprising as component A) a specific $C_2C_3$ random copolymer and as component B) a specific LDPE. In addition, the present invention relates to an article comprising said polymer composition and preferably said article is a blown film.

Polypropylenes succeed more and more to replace polyethylenes in many technical fields, as quite often the new generation of polypropylenes have enhanced properties compared to conventional polyethylene materials. This applies also for the field of blown films where polypropylene takes advantage of molecular engineering to overcome previous material shortcomings for blown-film production.

The blown films sector constitutes an area of ever-increasing importance in various application segments, such as industry packaging, consumer packaging, bags and sacks, lamination films, barrier films, packaging of food or medical products, agriculture films, hygienic products and products packaging.

It is desired to have a packaging material with satisfactory optical properties, such as low haze, having also good mechanical and sealing properties. It frequently turns out that improvement of one of the desired properties is achieved at the expense of at least one of the other properties. Several attempts have been made to solve the above problems.

WO 97/42258 A1 refers to polyolefin compositions for seal/peel films, comprising (percent by weight): A) from 20 to 50 % of HDPE, LDPE or EVA having MFR higher than 0.3 g/10 min; B) from 30 to 80 % of a random copolymer of propylene with ethylene and/or a C4-C8 alphaolefin, or of a polyolefin composition comprising not less than 20 % of said random copolymer of propylene; C) from 0 to 20 % of an elastomeric or elastomeric thermoplastic olefin polymer. Optical properties of the respective films are not disclosed, but the composition implies poor haze levels.

EP 1 813 423 A1 relates to transparent and stiff coextruded polypropylene blown films with ink-printable skin layer(s) bonded to the base or core layer without intermediate layers, whereby the core layer or base layer comprises at least 50 % of at least one of a polypropylene homopolymer, a polypropylene random copolymer or a heterophasic polypropylene copolymer and the skin layer(s) consists (consist) of either a mixture of at least 50 % of low density polyethylene and at least 10 % metallocene linear low density polyethylene and up to 5 % of common additives or a polypropylene random copolymer with a MFR between 0.8 and 3.0 g/10 min (ISO1133 at 230°C, 2.16 kg) mixed with up to 50 % of a low density polyethylene, linear low density polyethylene or metallocene linear low density polyethylene, MFR 0.5 to 3.5 g/10min, and up to 5 % common additives. The films are useful for label applications and for lamination, but have a poor thermal stability because of the high polyethylene content.

EP 1 831 016 A2 refers to film materials or structures obtained by co-extruding a rubber-impact modified heterophasic copolymer core layer with at least a second polyolefin. The second polyolefin may be a Ziegler-Natta catalyzed polyethylene (ZN PE), Ziegler-Natta catalyzed polypropylene random copolymer (ZN PP RCP), a metallocene catalyzed polypropylene random copolymer (mPP RCP), a linear low density polyethylene (LLDPE) and/or a metallocene catalyzed medium density polyethylene (mMDPE). These sheet or film materials may be co-extruded with other resins or laminated with other materials after extrusion. The heterophasic base polymer will necessarily cause high haze for the respective films.

Starting therefrom, it is one objective of the present to provide polymer compositions allowing manufacturing a blown film having improved optical properties, especially a low haze, and show at the same time also good mechanical and sealing properties. In addition, it is an object of the present invention to provide polymer composition having good processing properties, especially during the processing to blown films.

These objects have been solved by the polymer composition according to claim 1 comprising at least the following components:

A) 70.0 to 95.0 wt.-% based on the overall weight of the polymer composition of a $C_2C_3$ random copolymer; whereby said $C_2C_3$ random copolymer has

- a melting point in the range of 110 to 140°C determined by differential scanning calorimetry according to ISO 11357-3;
- a $MFR_2$ (230°C, 2.16 kg) determined according to ISO 1133 in the range of 0.5 to 4.0 g/10 min; and
- a total C2-content in the range of 1 to 10 wt.-% based on the overall weight of the $C_2C_3$ random copolymer;

B) 5.0 to 30.0 wt.-% based on the overall weight of the polymer composition of a LDPE; whereby said LDPE has

- a density determined according to ISO 1183 in the range of 915 to 922 $kg/m^3$; and

- a $MFR_2$ (190°C, 2.16 kg) determined according to ISO 1133 in the range of 0.9 to 20.0 g/10 min;

with the proviso that the weight proportions of components A) and B) add up to 100 wt.-%.

Advantageous embodiments of the polymer composition in accordance with the present invention are specified in the dependent claims 2 to 8.

Claim 9 of the present invention relates to an article comprising the polymer composition according to the present invention and claim 10 specifies said article as a blown film. Claims 11 to 13 refer to advantageous embodiments of the blown film and claim 14 refers to flexible packaging systems comprising the blown film according to the present invention.

## Definitions

Indications of Quantity

The polymer compositions in accordance with the present invention comprise the components A) and B) and optionally additives. The requirement applies here that the components A) and B) and if present the additives add up to 100 wt.-% in sum. The fixed ranges of the indications of quantity for the individual components A) and B) and optionally the additives are to be understood such that an arbitrary quantity for each of the individual components can be selected within the specified ranges provided that the strict provision is satisfied that the sum of all the components A), B) and optionally the additives add up to 100 wt.-%.

Where the term "comprising" is used in the present description and claims, it does not exclude other non-specified elements of major or minor functional importance. For the purposes of the present invention, the term "consisting of' is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

$C_2C_3$ random copolymer (component A))

The polymer composition in accordance with the present invention comprises as component A) 70.0 to 95.0 wt.-% based on the overall weight of the polymer composition of a $C_2C_3$ random copolymer; whereby said $C_2C_3$ random copolymer has a melting point in the range of 110 to 140°C determined by differential scanning calorimetry according to ISO 11357-3; a $MFR_2$ (230°C, 2.16 kg) determined according to ISO 1133 in the range of 0.5 to 4.0 g/10 min; and a total C2-content in the range of 1 to 10 wt.-% based on the overall weight of the $C_2C_3$ random copolymer.

Preferred embodiments of component A) will be discussed in the following.

According to one preferred embodiment of the present invention component A) is consisting of a1) 50.0 to 85.0 wt.-% of a polymer fraction having i) a C2-content in the range of 2.0 to less than 5.5 wt.-%, preferably in the range of 2.0 to 5.49 wt.-%; and ii) a melt flow rate $MFR_2$ (230°C, 2.16kg) determined according to ISO 1133 in the range of 0.5 to 5.0 g/10min; and a2) 15.0 to 50.0 wt.-% of a polymer fraction having i) a C2-content in the range of 5.5 to 10.0 wt.-%; and ii) a melt flow rate $MFR_2$ (230 °C/2.16kg) measured according to ISO 1133 in the range of 0.1 to 3.0 g/10min; whereby; the melt flow rate $MFR_2$ (230°C/2.16kg) of polymer fraction a2) is lower than the $MFR_2$ (230°C/2.16kg) of polymer fraction a1).

In another preferred embodiment component A) has a melting point in the range of 115 to 138°C, preferably in the range of 120 to 136°C and more preferably in the range of 128 to 135°C determined by differential scanning calorimetry according to ISO 11357-3.

Another preferred embodiment of the present application stipulates that component A) has a total C2-content in the range of 1.5 to 8.0 wt.-%, preferably in the range of 2.0 to 7.0 wt.-% and more preferably in the range of 2.5 to 5.5 wt.-% based on the overall weight of component A).

According to still another preferred embodiment component A) has a melt flow rate $MFR_2$ (230°C/2.16kg) measured according to ISO 1133 in the range of 0.7 to 3.5 g/10 min, preferably in the range of 0.8 to 2.5 g/10 min, more preferably in the range of 1.0 to 2.0 g/10 min and even more preferably in the range of 1.0 to 1.5 g/10 min.

Still another preferred embodiment of the present invention stipulates that component A) has a xylene soluble content (XCS) determined according to ISO 16152, 1ed, 25°C, based on the overall weight of component A) in the range of 0.5 to 15.0 wt.-%, preferably in the range of 1.0 to 10.0 wt.-% and more preferably in the range of 2.5 to 4.5 wt.-%.

In a further preferred embodiment of the present invention component A) has a content of units originating from

comonomers different from ethylene and propylene of below 7 wt.-%, preferably in the range of 0 to 3 wt.-% based on the overall weight of component A), more preferably in the range of 0.1 to 3 wt.-% and still more preferably component A) consists of units originating from ethylene and propylene.

According to another preferred embodiment of the present invention component A) has a glass transition temperature in the range of -20 to 0°C and preferably in the range of -10 to -1°C determined by differential scanning calorimetry according to ISO 11357-2.

In another preferred embodiment of the present invention the content of component A) in the polymer composition is in the range of 75 to 94 wt.-%, preferably in the range of 85 to 93 wt.-% and more preferably in the range of 88 to 92 wt.-% based on the overall weight of the polymer composition.

Still another preferred embodiment of the present invention stipulates that component A) is obtainable, preferably obtained, in the presence of a metallocene catalyst.

A preferred metallocene catatalyst comprises

i) a complex of formula (I):

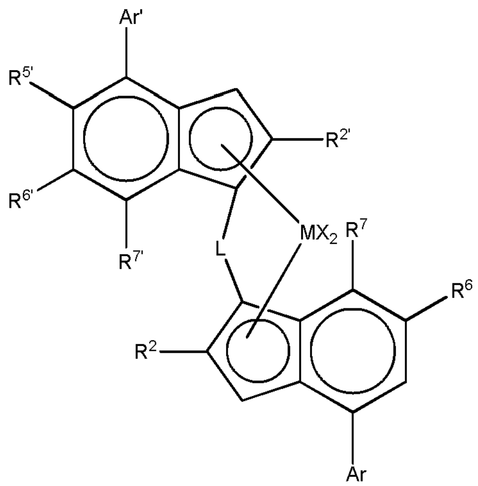

wherein M is zirconium or hafnium;

each X is a sigma ligand;

L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, $C_1$-$C_{20}$-hydrocarbyl, tri($C_1$-$C_{20}$-alkyl)silyl, $C_6$-$C_{20}$-aryl, $C_7$-$C_{20}$-arylalkyl or $C_7$-$C_{20}$-alkylaryl;

$R^2$ and $R^{2'}$ are each independently a $C_1$-$C_{20}$-hydrocarbyl radical optionally containing one or more heteroatoms from groups 14 to 16;

$R^{5'}$ is a $C_{1-20}$-hydrocarbyl group containing one or more heteroatoms from groups 14 to 16 optionally substituted by one or more halo atoms;

$R^6$and $R^{6'}$ are each independently hydrogen or a $C_{1-20}$-hydrocarbyl group optionally containing one or more heteroatoms from groups 14-16; wherein $R^{6'}$ is preferably a tertiary alkyl group;

$R^7$ is hydrogen or $C_{1-20}$-hydrocarbyl group optionally containing one or more heteroatoms from groups 14-16 and $R^{7'}$ is hydrogen;

Ar and Ar' each are independently an aryl or heteroaryl group having up to 20 carbon atoms optionally substituted by one or more groups $R^1$;

each $R^1$ is a $C_{1-20}$-hydrocarbyl group or two $R^1$ groups on adjacent carbon atoms taken together can form a fused 5 or 6 membered non aromatic ring with the Ar or Ar' group, said ring being itself optionally substituted with one or more groups $R^4$; each $R^4$ is a $C_{1-20}$-hydrocarbyl group; and

(ii) a cocatalyst comprising at least one or two compounds of a group 13 metal, preferably a Al and/or boron compound.

Conditions for manufacturing component A) are described in an at the time of filing the present application unpublished European patent application (application number: 19177302.7, filed on May 29, 2019) of the same applicant as the present application.
Component A) is preferably prepared by polymerizing propylene and ethylene by a sequential polymerization process comprising at least two reactors connected in series in the presence of a metallocene catalyst.
Preferably component A) is prepared in a sequential polymerization process comprising at least two polymerization reactors (R1) and (R2), whereby in the first polymerization reactor (R1) a first polymer fraction a1) is produced, which is subsequently transferred into the second polymerization reactor (R2). In the second polymerization reactor (R2), a second polymer fraction a2) is then produced in the presence of the first polymer fraction a1).
Polymerization processes which are suitable for producing component A) generally comprise at least two polymerization stages and each stage can be carried out in solution, slurry, fluidized bed, bulk or gas phase.
A preferred multistage process for manufacturing component B) is a "loop-gas phase"-process, such as developed by Borealis (known as BORSTAR® technology) which is described e.g. in patent literature, such as in EP 0 887 379 A1, WO 92/12182 A1, WO 2004/000899 A1, WO 2004/111095 A1, WO 99/24478 A1, WO 99/24479 A1 or in WO 00/68315 A1. A further suitable slurry-gas phase process is the Spheripol® process of Basell.
A preferred cocatalyst system for manufacturing component A) comprises a boron containing cocatalyst, like borate cocatalyst and an aluminoxane cocatalyst. Even more preferably, the catalyst is supported on a silica support.
Generally, the catalyst system used in the present invention may be prepared as described in WO 2018/122134 A1. The catalyst can be used in supported or unsupported form, preferably in supported form.

Component B)

The polymer composition according to the present invention comprises as component B) 5.0 to 30.0 wt.-% based on the overall weight of the polymer composition of a LDPE; whereby said LDPE has a density determined according to ISO 1183 in the range of 915 to 922 kg/$m^3$; and a $MFR_2$ (190°C, 2.16 kg) determined according to ISO 1133 in the range of 0.9 to 20.0 g/10 min.
Preferred embodiments of component B) will be discussed in the following.
According to one preferred embodiment of the present invention component B) has a $MFR_2$ (190°C, 2.16 kg) determined according to ISO 1133 in the range of 2.0 to 15.0 g/10 min, preferably in the range of 4.0 to 12.0 g/10 min, more preferably in the range of 6.5 to 10.0 g/10min and still more preferably in the range from 6.5 to 8.0 g/10 min.
Another preferred embodiment in accordance with the present invention stipulates that component B) has a density determined according to ISO 1183 in the range of 916 to 922 kg/$m^3$, preferably in the range of 917 to 921 kg/$m^3$ and more preferably is 920 kg/$m^3$ kg/$m^3$.
In a further preferred embodiment of the present invention component B) has a content of hexane solubles determined on a 100 μm thick cast film according to FDA 177.1520 in the range of 0 to 10.0 wt.-%, preferably in the range of 0 to 5.0 wt.-% and more preferably in the range of 0 to 1.0 wt.-% based on the overall weight of component B).
Still another preferred embodiment of the present invention stipulates that component B) has a melting point determined by differential scanning calorimetry according to ISO 11357-3 in the range of 90 to 120°C, preferably in the range of 95 to 115°C, more preferably in the range of 100 to 115°C and yet more preferably in the range of 107 to 110°C.
According to a further preferred embodiment of the present invention the content of component B) in the polymer composition is in the range of 6 to 25 wt.-%, preferably in the range of 7 to 15 wt.-% and more preferably in the range of 8 to 12 wt.-% based on the overall weight of the polymer composition.
Preferred materials for component B) are inter alia commercially available from Borealis AG (Austria) under the trade names CA8200 and CA9150.

Additives

The polymer composition according to the present invention may also comprise additives.
According to a preferred embodiment of the present invention the polymer composition comprises at least one additive preferably selected from the group consisting of slip agents, acid scavengers, UV-stabilisers, pigments, antioxidants, additive carriers, nucleating agents and mixtures thereof, whereby these additives preferably are present in 0.1 to 5.0 wt.-% and more preferably in 0.1 to 4.0 wt.-% based on the overall weight of the polymer composition.
Examples of antioxidants which may be used, are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl)diphenylamine), or antioxidant blends.

UV-stabilisers which might be used in the polymer compositions according to the present invention are, for example, Bis-(2,2,6,6-tetramethyl-4-piperidyl)-sebacate (CAS -No. 52829-07-9, Tinuvin 770); 2-hydroxy-4-n-°Ctoxy-benzophenone (CAS-No. 1843-05-6, Chimassorb 81).

Nucleating agents that can be used in the polymer compositions according to the present invention are for example sodium benzoate (CAS No. 532-32-1) or 1,3:2,4-bis(3,4-dimethylbenzylidene)sorbitol (CAS 135861-56-2, Millad 3988).

Polymer composition

Below preferred embodiments of the polymer composition according to the present invention will be discussed.

Another preferred embodiment of the present invention stipulates that the content of component A) in the polymer composition is in the range of 75 to 94 wt.-%, preferably in the range of 85 to 93 wt.-% and more preferably in the range of 88 to 92 wt.-% based on the overall weight of the polymer composition and/or the content of component B) in the polymer composition is in the range of 6 to 25 wt.-%, preferably in the range of 7 to 15 wt.-% and more preferably in the range of 8 to 12 wt.-% based on the overall weight of the polymer composition.

A preferred polymer composition according to the present invention comprises and preferably consists of the following components:

A) 65.0 to 94.9 wt.-% and preferably 84.0 to 92.75 wt.-% based on the overall weight of the polymer composition of a $C_2C_3$ random copolymer; whereby said $C_2C_3$ random copolymer has

- a melting point in the range of 110 to 140°C and preferably in the range of 128 to 135°C determined by differential scanning calorimetry according to ISO 11357-3;
- a $MFR_2$ (230°C, 2.16 kg) determined according to ISO 1133 in the range of 0.5 to 4.0 g/10 min and preferably in the range of 1.0 to 2.0 g/10 min; and
- a total C2-content in the range of 1 to 10 wt.-% and preferably in the range of 2.5 to 5.5 wt.-% based on the overall weight of the $C_2C_3$ random copolymer;

B) 5.0 to 30.0 wt.-% and preferably 7 to 15 wt.-% based on the overall weight of the polymer composition of a LDPE; whereby said LDPE has

- a density determined according to ISO 1183 in the range of 915 to 922 kg/m$^3$ and preferably in the range of 917 to 921 kg/m$^3$; and
- a $MFR_2$ (190°C, 2.16 kg) determined according to ISO 1133 in the range of 0.9 to 20.0 g/10 min preferably in the range of 6.5 to 10.0 g/ 10 min;

C) 0.1 to 5.0 wt.-% and preferably 0.25 to 1.0 wt.-% based on the overall weight of the polymer composition of additives preferably selected from the group consisting of slip agents, acid scavengers, UV-stabilisers, pigments, antioxidants, additive carriers, nucleating agents and mixtures thereof;

with the proviso that the weight proportions of components A), B) and C) add up to 100 wt.-%.

Blown film

The present invention also relates to blown films comprising or consisting of the polymer composition in accordance with the present invention.

Below preferred embodiments of the blown film according to the present invention will be discussed.

According to one preferred embodiment of the present invention the blown film has a sealing initiation temperature determined on a blown film having a thickness of 50 μm in the range of 80°C to below 120°C, preferably in the range of 90°C to 110°C and more preferably in the range of 98°C to 105°C.

In a further preferred embodiment the crystallization temperature ($T_c$) determined on a blown film having a thickness of 50 μm measured by differential scanning calorimetry according to ISO 11357-3 is in the range of 80 to 95°C and preferably in the range of 85 to 90°C.

Still another preferred embodiment of the present invention stipulates that the blown film has two melting points

wherein the first melting point determined by differential scanning calorimetry according to ISO 11357-3 is in the range of 110 to 130°C, preferably in the range of 115 to 125°C and more preferably in the range of 119 to 121°C and the second melting point determined by differential scanning calorimetry according to ISO 11357-3 is in the range from 100 to 115°C, preferably in the range of 103 to 112°C and more preferably in the range of 106 to 108°C.

According to another preferred embodiment of the present invention the blown film has a tensile modulus determined according to ISO 527-3 at 23°C on a blown film with a thickness of 50 μm in machine direction as well as in transverse direction in the range of 200 to 1000 MPa, preferably in the range of 300 to 700 MPa and more preferably in the range of 500 to 600 MPa.

In a further preferred embodiment of the present invention the blown film has a dart-drop impact strength determined according to ASTM D1709, method A on a blown film with a thickness of 50 μm in the range of 20 to 2000 g, preferably in the range of 40 to 1000 g, more preferably in the range of 45 to 500 g, still more preferably in the range of 50 to 300 g and even more preferably in the range of 55 to 80 g.

Still another preferred embodiment of the present invention stipulates that the blown film has an Elmendorf tear strength determined in accordance with ISO 6383/2 measured in machine direction in the range of 1.0 N/mm to 50.0 N/mm, preferably in the range of 4.0 to 20.0 N/mm and more preferably in the range of 6.0 to 10.0 N/mm.

According to a further preferred embodiment in accordance with the present invention the blown film has an Elmendorf tear strength determined in accordance with ISO 6383/2 measured in transverse direction (TD) in the range of 5.0 N/mm to 100.0 N/mm, preferably in the range of 10.0 to 40.0 N/mm and more preferably in the range of 15.0 to 25.0 N/mm.

A further preferred embodiment of the present invention stipulates that the blown film has a haze determined according to ASTM D1003-00 on a blown film with a thickness of 50 μm below 4.2 %, preferably in the range of 0.1 to 4.0 % and more preferably in the range of 0.5 to 3.3 %.

For manufacturing the blown film a melt of the polymer composition according to the present invention is extruded through an annular die and blown into a tubular film by forming a bubble which is collapsed between nip rollers after solidification. The blown extrusion can be preferably 25 effected at a temperature in the range 160 to 240 °C, and cooled by water or preferably by blowing gas (generally air) at a temperature of 10 to 50 °C to provide a frost line height of 0.5 to 8 times the diameter of the die. The blow up ratio should generally be in the range of from 1.5 to 4, such as from 2 to 4, preferably 2.5 to 3.5.

Flexible packaging systems

The present invention also relates to flexible packaging systems, selected from bags or pouches for food and pharmaceutical packaging comprising a blown film in accordance with the present invention.

The invention will now be described with reference to the following non-limiting examples.

## Experimental Part

### A. Measuring methods

The following definitions of terms and determination methods apply for the above general description of the invention as well as to the below examples unless otherwise defined.

### Melt Flow Rate

The melt flow rate (MFR) was determined according to ISO 1133 - Determination of the melt mass-flow rate (MFR) and melt volume-flow rate (MVR) of thermoplastics -- Part 1: Standard method and is indicated in g/10 min. The MFR is an indication of the flowability, and hence the processability, of the polymer. The higher the melt flow rate, the lower the viscosity of the polymer. The $MFR_2$ of polyethylene is determined at a temperature of 190°C and a load of 2.16 kg. The $MFR_2$ of polypropylene is determined at a temperature of 230°C and a load of 2.16 kg.

### Determination of the C2- and C3-content in component A) by NMR

Quantitative nuclear-magnetic resonance (NMR) spectroscopy was further used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of 1,2-tetrachloroethane-$d_2$ (TCE-$d_2$) along with chromium-(III)-acetylacetonate ($Cr(acac)_3$) resulting in a 65 mM solution of relaxation agent in

solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\,[\text{mol-\%}] = 100 * fE$$

The weight percent comonomer incorporation was calculated from the mole fraction:

$$E\,[\text{wt.-\%}] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Xylene cold solubles (XCS)**

The xylene soluble (XS) fraction as defined and described in the present invention is determined in line with ISO 16152 as follows: 2.0 g of the polymer were dissolved in 250 ml p-xylene at 135°C under agitation. After 30 minutes, the solution was allowed to cool for 15 minutes at ambient temperature and then allowed to settle for 30 minutes at 25 +/- 0.5°C. The solution was filtered with filter paper into two 100 ml flasks. The solution from the first 100 ml vessel was

evaporated in nitrogen flow and the residue dried under vacuum at 90°C until constant weight is reached. The xylene soluble fraction (percent) can then be determined as follows:

$$XS\% = (100*m*V_0)/(m_0*v);\ m_0 = \text{initial polymer amount (g)};\ m = \text{weight of residue (g)};\ V_0 = \text{initial volume (ml)};\ v = \text{volume of analysed sample (ml)}.$$

**Melting temperature $T_m$, crystallization temperature $T_c$ and melting enthalpy $H_m$**

The melting temperature was determined with a TA Instrument Q2000 differential scanning calorimetry (DSC) on 5 to 7 mg samples. DSC is run according to ISO 11357 / part 3 / method C2 in a heat / cool /heat cycle with a scan rate of 10°C/min in the temperature range of -30 to +225°C. Crystallization temperature ($T_c$) is determined from the cooling step, while melting temperature ($T_m$) and melting enthalpy ($H_m$) are determined from the second heating step. For calculating the melting enthalpy 50°C is used as lower integration limit. Melting and crystallization temperatures were taken as the peaks of endotherms and exotherms.

**Glass transition temperature $T_g$**

The glass transition temperature Tg was measured by DSC according to ISO 11357 / part 2.

**Density**

Density of the materials was measured according to ISO 1183-1.

All film properties (except hexane solubles) were determined on monolayer blown films of 50 μm thickness produced on a Collin blown film line. This line has a screw diameter of 30 millimeters (mm), L/D of 30, a die diameter of 60 mm, a die gap of 1.5 mm and a duo-lip cooling ring. The film samples were produced at 210°C with an average thickness of 50 μm, with a 2.5 blow-up ratio and an output rate of about 8 kilograms per hour (kg/h).

**Content of hexane solubles in component A)**

1 g of a polymer cast film of 100 μm thickness (chill roll temperature during film production = 40°C) was added to 400 ml hexane at 50°C for 2 hours while stirring with a reflux cooler. After 2 hours the mixture is immediately filtered on a filter paper N°41.The precipitate is collected in an aluminium recipient and the residual hexane is evaporated on a steam bath under N2 flow. The amount of hexane solubles is determined by the formula

$$(\text{(wt. sample + wt. crucible)-(wt crucible)}) / (\text{wt. sample}) \cdot 100.$$

**Sealing initiation temperature (SIT); (sealing end temperature (SET), sealing range)**

The sealing temperature range is the temperature range, in which the films can be sealed according to conditions given below. The lower limit (heat sealing initiation temperature (SIT)) is the sealing temperature at which a sealing strength of >5 N is achieved. The upper limit (sealing end temperature (SET)) is reached, when the films stick to the sealing device.

The sealing range was determined on a J&B Universal Sealing Machine Type 3000 with a film of 50 μm thickness with the following further parameters:

Specimen width: 25.4 mm
Seal Pressure: 0.1 N/mm$^2$
Seal Time: 0.1 s
Cool time: 99 s
Peel Speed: 10 mm/s
Start temperature: 80°C
End temperature: 150°C
Increments: 10°C

The specimen is sealed inside to inside at each sealbar temperature and seal strength (force) is determined at each step. The temperature is determined at which the seal strength reaches 5 N.

### Tensile modulus

Tensile Modulus in machine and transverse direction are determined according to ISO 527-3 at 23°C on blown films of 50 μm thickness produced on a monolayer cast film line with a melt temperature of 220°C and a chill roll temperature of 20°C with a thickness of 50 μm produced as indicated below. Testing was performed at a cross head speed of 1 mm/min.

### Dart-drop impact strength (DDI)

DDI was measured using ASTM D1709, method A (Alternative Testing Technique) from the film samples. A dart with a 38 mm diameter hemispherical head was dropped from a height of 0.66 m onto a film clamped over a hole. Successive sets of twenty specimens are tested. One weight was used for each set and the weight is increased (or decreased) from set to set by uniform increments. The weight resulting in failure of 50 % of the specimens is calculated and reported.

### Tear Strength

Tear Strength (determined as Elmendorf tear (N)): Applies both for the measurement in machine direction (MD) and transverse direction (TD). The tear strength was measured using the ISO 6383/2 method. The force required to propagate tearing across a film sample was measured using a pendulum device. The pendulum swings under gravity through an arc, tearing the specimen from pre-cut slit. The film sample was fixed on one side by the pendulum and on the other side by a stationary clamp. The tear resistance is the force required to tear the specimen. The relative tear resistance (N/mm) was then calculated by dividing the tear resistance by the thickness of the film.

### Haze

The haze was determined according to ASTM D1003-00 on films blown as described below with a thickness of 50 μm.

## B. Materials used

### $C_2C_3$ random copolymer (component A))

In the Working Example according to the invention !E1 and in the Comparative Examples CE1 and CE2 a $C_2C_3$ random copolymer A) manufactured as follows was used.

The catalyst used in the polymerization processes for the $C_2C_3$ random copolymer A) was prepared as follows: The metallocene (MC1) (rac-anti-dimethylsilandiyl(2-methyl-4-phenyl-5-methoxy-6-tert-butyl-indenyl)(2-methyl-4-(4-tert-butylphenyl)indenyl)zirconium dichloride)

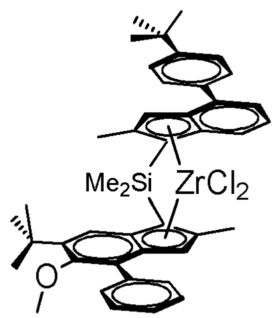

has been synthesized according to the procedure as described in WO 2013/007650 A1, E2.

### Preparation of MAO-silica support

A steel reactor equipped with a mechanical stirrer and a filter net was flushed with nitrogen and the reactor temperature was set to 20°C. Next silica grade DM-L-303 from AGC Si-Tech Co, pre-calcined at 600°C (7.4 kg) was added from a feeding drum followed by careful pressuring and depressurising with nitrogen using manual valves. Then toluene (32 kg) was added. The mixture was stirred for 15 min. Next 30 wt.-% solution of MAO in toluene (17.5 kg) from

Lanxess was added via feed line on the top of the reactor within 70 min. The reaction mixture was then heated up to 90°C and stirred at 90°C for additional two hours. The slurry was allowed to settle and the mother liquor was filtered off. The MAO treated support was washed twice with toluene (32 kg) at 90°C, following by settling and filtration. The reactor was cooled off to 60°C and the solid was washed with heptane (32.2 kg). Finally MAO treated SiO2 was dried at 60° under nitrogen flow for 2 hours and then for 5 hours under vacuum (-0.5 barg) with stirring. MAO treated support was collected as a free-flowing white powder found to contain 12.6 % Al by weight.

**Catalyst system preparation**

30 wt.-% MAO in toluene (2.2 kg) was added into a steel nitrogen blanked reactor via a burette at 20°C. Toluene (7 kg) was then added under stirring. Metallocene MC1 (286 g) was added from a metal cylinder followed by flushing with 1 kg toluene. The mixture was stirred for 60 minutes at 20°C. Trityl tetrakis(pentafluorophenyl) borate (336 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60°C for 2h and additionally for 5 h under vacuum (-0.5 barg) under stirring. Dried catalyst was sampled in the form of pink free flowing powder containing 13.9 wt.-% Al and 0.26 wt.-% Zr.

The polymerization for preparing the $C_2C_3$ random copolymer (A) was performed in a Borstar pilot plant with a 2-reactor set-up (loop - gas phase reactor (GPR 1)). In Table 1 the polymerization conditions for the $C_2C_3$ random copolymer (A) are given.

Table 1a: Preparation of the $C_2C_3$ random copolymer (A).

| **Prepoly reactor** | |
|---|---|
| Temperature [°C] | 25 |
| Pressure [Pa] | 5190 |
| Catalyst feed [kg/h] | 1.8 |
| H2 [g/h] | 0.3 |
| Feed H2/C3 ratio [mol/kmol] | 0.09 |
| Residence time [h] | 0.4 |
| **loop reactor** | |
| Temperature [°C] | 68 |
| Pressure [Pa] | 5387 |
| Feed H2/C3 ratio [mol/kmol] | 0.30 |
| Feed C2/C3 ratio [mol/kmol] | 48.26 |
| Polymer Split [wt.-%] | 65 |
| $MFR_2$ [g/10 min] (MFR of a1)) | 1.4 |
| Total C2 loop [wt.-%] (C2 of a1)) | 5.0 |
| Residence time | 0.43 |

**Table 1b:** Preparation of the $C_2C_3$ random copolymer (A).

| **GPR1** | |
|---|---|
| Temperature [°C] | 75 |
| Pressure [Pa] | 2500 |
| H2/C3 ratio [mol/kmol] | 3.0 |
| C2/C3 ratio [mol/kmol] | 217 |
| Polymer residence time (h) | 2.1 |

(continued)

| GPR1 | |
|---|---|
| Polymer Split [wt.-%] | 35 |
| Total $MFR_2$ [g/10 min] | 1.2 |
| $MFR_2$ [g/10 min] in GPR1 (MFR of a2)) | 1.1 |
| Total C2 [wt.-%] (loop + GPR1) | 4.9 |
| C2 in GPR1 [wt.-%] (C2 of a2)) | 4.7 |
| XCS [wt.-%] | 3.4 |
| Total productivity (kg PP/g cat) | 29 |

The polymer powder was compounded in a co-rotating twin-screw extruder Coperion ZSK 57 at 220°C with 0.1 wt.-% antioxidant (Irgafos 168FF, CAS No. 6683-19-4), 0.1 wt.-% of a sterically hindered phenol (Irganox 1010FF, CAS No. 6683-19-8) and 0.05 wt.-% of Ca-stearate (wt.-% refer to the overall weight of the polymer powder).

**Table 2:** Properties of the $C_2C_3$ random copolymer copolymer (A).

| **Physical property** | **unit** | $C_2C_3$ random copolymer |
|---|---|---|
| MFR (230°C, 2.16 kg) | [g/10min] | 1.2 |
| XCS total | [wt.-%] | 3.4 |
| C2-content | [wt.-%] | 4.9 |
| C3-content | [wt.-%] | 95.1 |
| Melting point, $T_m$ | [°C] | 118 |
| Crystallization temperature, $T_c$ | [°C] | 80 |

**Component B)**

**CA8200:** CA8200 is a low density polyethylene (LDPE) produced in a high pressure autoclave process having a Melt Flow Rate (190°C/2.16 kg) of 7.5 g/10 min, a melting temperature (determined by DSC according to ISO 11357/03) of 108°C, a density of 920 kg/$m^3$ (determined according to ISO1183) and is commercially available from Borealis AG, Austria.

**Further components**

**FT5230:** FT5320 is a low density polyethylene commercially available from Borealis AG, Austria. It has a density of 923 kg/$m^3$ (determined according to ISO1183), a Melt Flow Rate (190°C/2.16 kg) of 0.75 g/10min and a melting temperature (determined by DSC according to ISO 11357/03) of 112°C.

**C. Manufacturing of blown films**

Blending of the components was done in a Collin 30 lab scale blown film machine and a 50 $\mu$m monolayer blown film is produced with the same line (BUR = 1 : 2.5). Before blending, the components were pre-mixed in an intensive mixer. In Table 3 the compositions of the polymer compositions according to Comparative Examples CE1 and CE2 and the Inventive Examples !E1 and film parameters are shown.

**Table 3:** Composition and properties of blown films.

| **Component** | **Unit** | **CE1** | **CE2** | **IE1** |
|---|---|---|---|---|
| $C_2C_3$ random copolymer (A) | wt.-% | 100 | 90 | 90 |
| CA8200 (B) | wt.-% | - | - | 10 |
| FT5230 | wt.-% | - | 10 | - |

(continued)

| Properties of a blown film (50 μm thickness) | | | | |
|---|---|---|---|---|
| Dart Drop Impact | 9 | 56 | 64 | 65 |
| Haze | % | 4.2 | 12.3 | 3.1 |
| Tear Strength (MD) | N/mm | 8.07 | 7.94 | 8.22 |
| Tear Strength (TD) | N/mm | 19.76 | 19.69 | 22.77 |
| Sealing initiation temperature | °C | 104 | 101 | 103 |
| Crystallization temperature | °C | 82 | 88 | 87 |
| Melting temperature 1 | °C | 118 | 120 | 119 |
| Melting temperature 2 | °C | - | 111 | 107 |
| Melting enthalpy 1 | J/g | 62 | 11 | 12 |
| Melting enthalpy 2 | J/g | - | 56 | 57 |

**D Discussion of the results**

As can be gathered from Table 3 the addition of the specific LDPE according to the present invention (component (B)) to component (A) allows to improve the optical properties, especially the haze, of a blown film (see comparison of CE1 and IE1) without deteriorating the mechanical properties of the blown film. CE2 demonstrates that the addition of a LDPE outside the scope of the present invention (FT5230) results in a film with poor optical properties, especially a significantly increased haze.

**Claims**

**1.** A polymer composition comprising at least the following components:

A) 70.0 to 95.0 wt.-% based on the overall weight of the polymer composition of a $C_2C_3$ random copolymer; whereby said $C_2C_3$ random copolymer has

- a melting point in the range of 110 to 140°C determined by differential scanning calorimetry according to ISO 11357-3;
- a $MFR_2$ (230°C, 2.16 kg) determined according to ISO 1133 in the range of 0.5 to 4.0 g/10 min; and
- a total C2-content in the range of 1 to 10 wt.-% based on the overall weight of the $C_2C_3$ random copolymer;

B) 5.0 to 30.0 wt.-% based on the overall weight of the polymer composition of a LDPE; whereby said LDPE has

- a density determined according to ISO 1183 in the range of 915 to 922 kg/$m^3$; and
- a $MFR_2$ (190°C, 2.16 kg) determined according to ISO 1133 in the range of 0.9 to 20.0 g/10 min;

with the proviso that the weight proportions of components A) and B) add up to 100 wt.-%.

**2.** The polymer composition according to claim 1, **characterized in that**,

component A) is consisting of

a1) 50.0 to 85.0 wt.-% of a polymer fraction having

i) a C2-content in the range of 2.0 to less than 5.5 wt.-%, preferably in the range of 2.0 to 5.49 wt.-%; and
ii) a melt flow rate $MFR_2$ (230°C, 2.16kg) determined according to ISO 1133 in the range of 0.5 to 5.0 g/10min; and

a2) 15.0 to 50.0 wt.-% of a polymer fraction having

i) a C2-content in the range of 5.5 to 10.0 wt.-%; and
ii) a melt flow rate $MFR_2$ (230°C/2.16kg) measured according to ISO 1133 in the range of from 0.1 to 3.0 g/10min;

whereby; the melt flow rate $MFR_2$ (230°C/2.16kg) of polymer fraction a2) is lower than the $MFR_2$ (230°C/2.16kg) of polymer fraction a1); and whereby
component A) preferably has

• a melting point in the range of 115 to 138°C, preferably in the range of 120 to 136°C and more preferably in the range of 128 to 135°C determined by differential scanning calorimetry according to ISO 11357-3; and/or
• a total C2-content in the range of 1.5 to 8.0 wt.-%, preferably in the range of 2.0 to 7.0 wt.-% and more preferably in the range of 2.5 to 5.5 wt.-% based on the overall weight of component A); and/or
• a melt flow rate $MFR_2$ (230°C/2.16kg) measured according to ISO 1133 in the range of 0.7 to 3.5 g/10 min, preferably in the range of 0.8 to 2.5 g/10 min and more preferably in the range of 1.0 to 2.0 g/ 10 min.

**3.** The polymer composition according to claim 1 or 2, **characterized in that**,
component A) has

• a xylene soluble content (XCS) determined according to ISO 16152, 1ed, 25°C, based on the overall weight of component A) in the range of 0.5 to 15.0 wt.-%, preferably in the range of 1.0 to 10.0 wt.-% and more preferably in the range of 2.5 to 4.5 wt.-%; and/or
• a content of units originating from comonomers different from ethylene and propylene of below 7 wt.-%, preferably in the range of 0 to 3 wt.-% based on the overall weight of component A), more preferably in the range of 0.1 to 3 wt.-% and still more preferably component A) consists of units originating from ethylene and propylene; and/or
• a glass transition temperature in the range of -20 to 0°C and preferably in the range of -10 to -1°C determined by differential scanning calorimetry according to ISO 11357-2.

**4.** The polymer composition according to any one of the preceding claims, **characterized in that**,
component A) is obtainable, preferably obtained, in the presence of a metallocene catalyst, preferably said metallocene catatalyst comprises

i) a complex of formula (I):

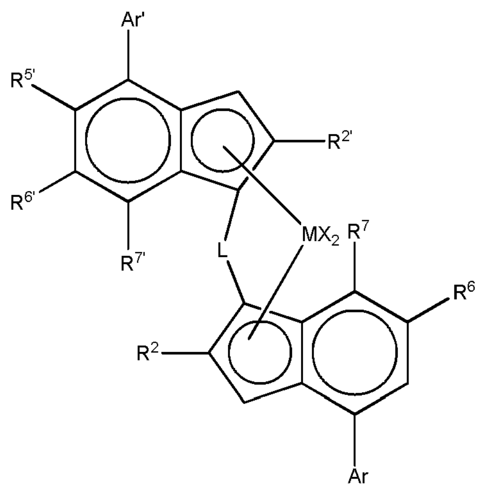

wherein M is zirconium or hafnium;
each X is a sigma ligand;
L is a divalent bridge selected from -R'$_2$C-, -R'$_2$C-CR'$_2$-, -R'$_2$Si-, -R'$_2$Si-SiR'$_2$-, -R'$_2$Ge-, wherein each R' is independently a hydrogen atom, $C_1$-$C_{20}$-hydrocarbyl, tri($C_1$-$C_{20}$-alkyl)silyl, $C_6$-$C_{20}$-aryl, $C_7$-$C_{20}$-arylalkyl or $C_7$-$C_{20}$-alkylaryl;
$R^2$ and $R^{2'}$ are each independently a $C_1$-$C_{20}$-hydrocarbyl radical optionally containing one or more heteroatoms from groups 14 to 16;

$R^{5'}$ is a $C_{1-20}$-hydrocarbyl group containing one or more heteroatoms from groups 14 to 16 optionally substituted by one or more halo atoms;

$R^6$ and $R^{6'}$ are each independently hydrogen or a $C_{1-20}$-hydrocarbyl group optionally containing one or more heteroatoms from groups 14-16; wherein $R^{6'}$ is preferably a tertiary alkyl group;

$R^7$ is hydrogen or $C_{1-20}$-hydrocarbyl group optionally containing one or more heteroatoms from groups 14-16 and $R^{7'}$ is hydrogen;

Ar and Ar' each are independently an aryl or heteroaryl group having up to 20 carbon atoms optionally substituted by one or more groups $R^1$;

each $R^1$ is a $C_{1-20}$-hydrocarbyl group or two $R^1$ groups on adjacent carbon atoms taken together can form a fused 5 or 6 membered non aromatic ring with the Ar or Ar' group, said ring being itself optionally substituted with one or more groups $R^4$; each $R^4$ is a $C_{1-20}$-hydrocarbyl group; and

(ii) a cocatalyst comprising at least one or two compounds of a group 13 metal, preferably a Al and/or boron compound.

**5.** The polymer composition according to any one of the preceding claims, **characterized in that**, component B) has

- a $MFR_2$ (190°C, 2.16 kg) determined according to ISO 1133 in the range of 2.0 to 15.0 g/10 min, preferably in the range of 4.0 to 12.0 g/10 min and more preferably in the range of 6.5 to 10.0 g/ 10min; and/or
- a density determined according to ISO 1183 in the range of 916 to 922 kg/$m^3$, preferably in the range of 917 to 921 kg/$m^3$ and more preferably is 920 kg/$m^3$ kg/$m^3$; and/or
- a content of hexane solubles determined on a 100 $\mu$m thick cast film according to FDA 177.1520 in the range of 0 to 10.0 wt.-%, preferably in the range of 0 to 5.0 wt.-% and more preferably in the range of 0 to 1 wt.-% based on the overall weight of component B); and/or
- a melting point determined by differential scanning calorimetry according to ISO 11357-3 in the range of 90 to 120°C, preferably in the range of 95 to 115°C, more preferably in the range of 100 to 115°C and yet more preferably in the range of 107 to 110°C.

**6.** The polymer composition according to any one of the preceding claims, **characterized in that**, the polymer composition comprises at least one additive C), preferably selected from the group consisting of slip agents, acid scavengers, UV-stabilisers, pigments, antioxidants, additive carriers, nucleating agents and mixtures thereof, whereby these additives preferably are present in 0.1 to 5.0 wt.-% and more preferably in 0.1 to 4.0 wt.-% based on the overall weight of the polymer composition.

**7.** The polymer composition according to any one of the preceding claims, **characterized in that**,

the content of component A) in the polymer composition is in the range of 75 to 94 wt.-%, preferably in the range of 85 to 93 wt.-% and more preferably in the range of 88 to 92 wt.-% based on the overall weight of the polymer composition; and/or

the content of component B) in the polymer composition is in the range of 6 to 25 wt.-%, preferably in the range of 7 to 15 wt.-% and more preferably in the range of 8 to 12 wt.-% based on the overall weight of the polymer composition.

**8.** The polymer composition according to any one of the preceding claims, **characterized in that**,

the polymer composition comprises and preferably consists of the following components:

A) 65.0 to 94.9 wt.-% and preferably 84.0 to 92.75 wt.-% based on the overall weight of the polymer composition of a $C_2C_3$ random copolymer; whereby said $C_2C_3$ random copolymer has

- a melting point in the range of 110 to 140°C and preferably in the range of 128 to 135°C determined by differential scanning calorimetry according to ISO 11357-3;
- a $MFR_2$ (230°C, 2.16 kg) determined according to ISO 1133 in the range of 0.5 to 4.0 g/10 min and preferably in the range of 1.0 to 2.0 g/10 min; and
- a total C2-content in the range of 1 to 10 wt.-% and preferably in the range of 2.5 to 5.5 wt.-% based on the overall weight of the $C_2C_3$ random copolymer;

B) 5.0 to 30.0 wt.-% and preferably 7 to 15 wt.-% based on the overall weight of the polymer composition of a LDPE; whereby said LDPE has

- a density determined according to ISO 1183 in the range of 915 to 922 $kg/m^3$ and preferably in the range of 917 to 921 $kg/m^3$; and
- a $MFR_2$ (190°C, 2.16 kg) determined according to ISO 1133 in the range of 0.9 to 20.0 g/10 min preferably in the range of 6.5 to 10.0 g/ 10 min;

C) 0.1 to 5.0 wt.-% and preferably 0.25 to 1.0 wt.-% based on the overall weight of the polymer composition of additives preferably selected from the group consisting of slip agents, acid scavengers, UV-stabilisers, pigments, antioxidants, additive carriers, nucleating agents and mixtures thereof;

with the proviso that the weight proportions of components A), B) and C) add up to 100 wt.-%.

**9.** An article comprising the polymer composition according to any one of claims 1 to 8.

**10.** The article according to claim 9, wherein the article is a blown film.

**11.** The blown film according to claim 10, **characterized in that**,

the sealing initiation temperature of a blown film having a thickness of 50 μm is in the range of 80°C to below 120°C, preferably in the range of 90°C to 110°C and more preferably in the range of 98°C to 105°C; and/or
the crystallization temperature ($T_c$) of a blown film having a thickness of 50 μm determined by differential scanning calorimetry according to ISO 11357-3 is in the range of 80 to 95°C and preferably in the range of 85 to 90°C; and/or
the blown film has two melting points wherein the first melting point determined by differential scanning calorimetry according to ISO 11357-3 is in the range of 110 to 130°C, preferably in the range of 115 to 125°C and more preferably in the range of 119 to 121°C and the second melting point determined by differential scanning calorimetry according to ISO 11357-3 is in the range from 100 to 115°C, preferably in the range of 103 to 112°C and more preferably in the range of 106 to 108°C.

**12.** The blown film according to claim 10 or 11, **characterized in that**,

the blown film has a tensile modulus determined according to ISO 527-3 at 23°C on a blown film with a thickness of 50 μm in machine direction as well as in transverse direction in the range of 200 to 1000 MPa, preferably in the range of 300 to 700 MPa and more preferably in the range of 500 to 600 MPa; and/or
the blown film has a dart-drop impact strength determined according to ASTM D1709, method A on a blown film with a thickness of 50 μm in the range of 20 to 2000 g, preferably in the range of 40 to 1000 g, more preferably in the range of 45 to 500 g, still more preferably in the range of 50 to 300 g and even more preferably in the range of 55 to 80 g; and/or
the blown film has an Elmendorf tear strength determined in accordance with ISO 6383/2 measured in machine direction in the range of 1.0 N/mm to 50.0 N/mm, preferably in the range of 4.0 to 20.0 N/mm and more preferably in the range of 6.0 to 10.0 N/mm; and/or
the blown film has an Elmendorf tear strength determined in accordance with ISO 6383/2 measured in transverse direction (TD) in the range of 5.0 N/mm to 100.0 N/mm, preferably in the range of 10.0 to 40.0 N/mm and more preferably in the range of 15.0 to 25.0 N/mm.

**13.** The blown film according to any one of claims 10 to 12, **characterized in that**,
the blown film has a haze determined according to ASTM D1003-00 on a blown film with a thickness of 50 μm below 4.2 %, preferably in the range of 0.1 to 4.0 % and more preferably in the range of 0.5 to 3.3 %.

**14.** Flexible packaging systems, selected from bags or pouches for food and pharmaceutical packaging comprising a blown film according to any one of claims 10 to 13.

**Patentansprüche**

**1.** Polymerzusammensetzung, mindestens die folgenden Komponenten umfassend:

A) 70,0 bis 95,0 Gew.-%, basierend auf dem Gesamtgewicht der Polymerzusammensetzung, von einem statistischen $C_2C_3$-Copolymer; wobei das statistische $C_2C_3$-Copolymer aufweist

- einen Schmelzpunkt im Bereich von 110 bis 140°C, bestimmt durch dynamische Differenzkalorimetrie gemäß ISO 11357-3;
- eine $MFR_2$ (230°C, 2,16 kg), bestimmt gemäß ISO 1133, im Bereich von 0,5 bis 4,0 g/10 Min.; und
- einen C2-Gesamtgehalt im Bereich von 1 bis 10 Gew.-% basierend auf dem Gesamtgewicht des statistischen $C_2C_3$-Copolymers;

B) 5,0 bis 30,0 Gew.-%, basierend auf dem Gesamtgewicht der Polymerzusammensetzung, einer LDPE; wobei die LDPE aufweist

- eine Dichte, bestimmt gemäß ISO 1183, im Bereich von 915 bis 922 kg/$m^3$; und
- eine $MFR_2$ (190°C, 2,16 kg), bestimmt gemäß ISO 1133, im Bereich von 0,9 bis 20,0 g/10 Min.;

unter der Voraussetzung, dass die Gewichtsproportionen von Komponenten A) und B) gemeinsam 100 Gew.-% ergeben.

**2.** Polymerzusammensetzung nach Anspruch 1, **dadurch gekennzeichnet, dass**

Komponente A) besteht aus

a1) 50,0 bis 85,0 Gew.-% einer Polymerfraktion, die aufweist

i) einen $C_2$-Gehalt im Bereich von 2,0 bis weniger als 5,5 Gew.-%, vorzugsweise im Bereich von 2,0 bis 5,49 Gew.-%; und
ii) eine Schmelzflussrate $MFR_2$ (230°C, 2,16kg), bestimmt gemäß ISO 1133, im Bereich von 0,5 bis 5,0 g/10 Min.; und

a2) 15,0 bis 50,0 Gew.-% einer Polymerfraktion, die aufweist

i) einen $C_2$-Gehalt im Bereich von 5,5 bis 10,0 Gew.-%; und
ii) eine Schmelzflussrate $MFR_2$ (230°C/2,16kg), gemessen gemäß ISO 1133, im Bereich von 0,1 bis 3,0 g/10 Min.;

wobei; die Schmelzflussrate $MFR_2$ (230°C/2,16kg) einer Polymerfraktion a2) niedriger als die $MFR_2$ (230°C/2,16kg) einer Polymerfraktion a1) ist; und wobei
Komponente A) vorzugsweise aufweist

- einen Schmelzpunkt im Bereich von 115 bis 138°C, vorzugsweise im Bereich von 120 bis 136°C und bevorzugter im Bereich von 128 bis 135°C, bestimmt durch dynamische Differenzkalorimetrie gemäß ISO 11357-3; und/oder
- einen $C_2$-Gesamtgehalt im Bereich von 1,5 bis 8,0 Gew.-%, vorzugsweise im Bereich von 2,0 bis 7,0 Gew.-% und bevorzugter im Bereich von 2,5 bis 5,5 Gew.-%, basierend auf dem Gesamtgewicht von Komponente A); und/oder
- eine Schmelzflussrate $MFR_2$ (230°C/2,16kg), gemessen gemäß ISO 1133, im Bereich von 0,7 bis 3,5 g/10 Min., vorzugsweise im Bereich von 0,8 bis 2,5 g/10 Min. und bevorzugter im Bereich von 1,0 bis 2,0 g/10 Min.

**3.** Polymerzusammensetzung nach Anspruch 1 oder 2, **dadurch gekennzeichnet, dass**
Komponente A) aufweist

- einen Xylol löslichen Gehalt (XCS), bestimmt gemäß ISO 16152, 1ed, 25°C, basierend auf dem Gesamtgewicht von Komponente A) im Bereich von 0,5 bis 15,0 Gew.-%, vorzugsweise im Bereich von 1,0 bis 10,0 Gew.-% und bevorzugter im Bereich von 2,5 bis 4,5 Gew.-%; und/oder
- einen Gehalt von Einheiten, die aus Comonomeren hervorgehen, die sich von Ethylen und Propylen unterscheiden, von unter 7 Gew.-%, vorzugsweise im Bereich von 0 bis 3 Gew.-% basierend auf dem Gesamtgewicht von Komponente A), bevorzugter im Bereich von 0,1 bis 3 Gew.-% und Komponente A) noch bevorzugter aus

Einheiten bestehend, die aus Ethylen und Propylene hervorgehen; und/oder
- eine Glasübergangstemperatur im Bereich von -20 bis 0°C und vorzugsweise im Bereich von -10 bis -1°C, bestimmt durch dynamische Differenzkalorimetrie gemäß ISO 11357-2.

**4.** Polymerzusammensetzung nach einem der vorstehenden Ansprüche, **dadurch gekennzeichnet, dass** Komponente A) in Gegenwart von einem Metallocenkatalysator erhältlich ist, vorzugsweise erhalten wird, wobei der Metallocenkatalysator vorzugsweise umfasst

i) einen Komplex der Formel (I):

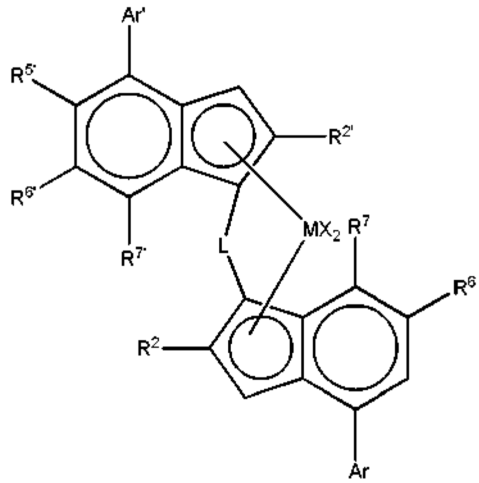

wobei M Zirkonium oder Hafnium ist;
jedes X ein Sigma-Ligand ist;
L eine zweiwertige Brücke ist, ausgewählt aus $-R'_2C-$, $-R'_2C-CR'_2-$, $-R'_2Si-$, $-R'_2Si-SiR'_2-$ , $-R'_2Ge-$, wobei jedes R' unabhängig ein Wasserstoffatom, $C_1$-$C_{20}$-hydrocarbyl, tri($C_1$-$C_{20}$-alkyl)silyl, $C_6$-$C_{20}$-aryl, $C_7$-$C_{20}$-arylalkyl oder $C_7$-$C_{20}$-alkylaryl ist;
$R^2$ und $R^{2'}$ jeweils unabhängig ein $C_1$-$C_{20}$-Kohlenwasserstoffrest sind, der optional ein oder mehrere Heteroatome aus den Gruppen 14 bis 16 enthält;
$R^{5'}$ eine $C_{1-20}$-Kohlenwasserstoff-Gruppe ist, die ein oder mehrere Heteroatome aus den Gruppen 14 bis 16 enthält, die optional durch ein oder mehrere Halo-Atome substituiert sind;
$R^6$ und $R^{6'}$ jeweils unabhängig Wasserstoff oder eine $C_{1-20}$-KohlenwasserstoffGruppe sind, die optional ein oder mehrere Heteroatome aus den Gruppen 14-16 enthalten; wobei $R^{6'}$ vorzugsweise eine tertiäre Alkyl-Gruppe ist;
$R^7$ Wasserstoff oder $C_{1-20}$-Kohlenwasserstoff-Gruppe ist, die optional ein oder mehrere Heteroatome aus den Gruppen 14-16 enthalten, und $R^{7'}$ Wasserstoff ist;
Ar und Ar' jeweils unabhängig eine Aryl- oder Heteroaryl-Gruppe sind, die bis zu 20 Kohlenstoffatome aufweist, die optional durch eine oder mehrere $R^1$ Gruppen substituiert sind;
jedes $R^1$ eine $C_{1-20}$-Kohlenwasserstoff-Gruppe ist oder zwei $R^1$ Gruppen an benachbarten Kohlenstoffatomen zusammengenommen einen fusionierten 5- oder 6-gliedrigen nicht aromatischen Ring mit der Ar- oder Ar'-Gruppe bilden können, wobei der Ring selbst optional durch eine oder mehrere $R^4$Gruppen substituiert wird; jedes $R^4$ eine $C_{1-20}$-Kohlenwasserstoff-Gruppe ist; und

(ii) einen Co-Katalysator, umfassend mindestens eine oder zwei Verbindungen aus einem Gruppe 13 Metall, vorzugsweise eine Al- und/oder Bor-Verbindung.

**5.** Polymerzusammensetzung nach einem der vorstehenden Ansprüche, **dadurch gekennzeichnet, dass** Komponente B) aufweist

- eine $MFR_2$ (190°C, 2,16 kg), bestimmt gemäß ISO 1133, im Bereich von 2,0 bis 15,0 g/10 Min., vorzugsweise im Bereich von 4,0 bis 12,0 g/10 Min. und bevorzugter im Bereich von 6,5 bis 10,0 g/ 10 Min.; und/oder
- eine Dichte, bestimmt gemäß ISO 1183, im Bereich von 916 bis 922 $kg/m^3$, vorzugsweise im Bereich von 917 bis 921 $kg/m^3$ und bevorzugter 920 $kg/m^3$ $kg/m^3$; und/oder

- einen Gehalt an Hexan löslichen Stoffen, bestimmt an einer 100 μm dicken gegossenen Folie gemäß FDA 177.1520 im Bereich von 0 bis 10,0 Gew.-%, vorzugsweise im Bereich von 0 bis 5,0 Gew.-% und bevorzugter im Bereich von 0 bis 1 Gew.-% basierend auf dem Gesamtgewicht von Komponente B); und/oder
- einen Schmelzpunkt, bestimmt durch dynamische Differenzkalorimetrie gemäß ISO 11357-3, im Bereich von 90 bis 120°C, vorzugsweise im Bereich von 95 bis 115°C, bevorzugter im Bereich von 100 bis 115°C und noch bevorzugter im Bereich von 107 bis 110°C.

**6.** Polymerzusammensetzung nach einem der vorstehenden Ansprüche, **dadurch gekennzeichnet, dass** die Polymerzusammensetzung mindestens ein Additiv C) umfasst, vorzugsweise aus der Gruppe ausgewählt, bestehend aus Gleitmitteln, Säurefängern, UV-Stabilisatoren, Pigmenten, Antioxidantien, Trägern für Additive, Nukleierungsmitteln und Gemischen davon, wobei diese Additive vorzugsweise in 0,1 bis 5,0 Gew.-% und bevorzugter in 0,1 bis 4,0 Gew.-% basierend auf dem Gesamtgewicht der Polymerzusammensetzung vorhanden sind.

**7.** Polymerzusammensetzung nach einem der vorstehenden Ansprüche, **dadurch gekennzeichnet, dass**

der Gehalt von Komponente A) in der Polymerzusammensetzung im Bereich von 75 bis 94 Gew.-%, vorzugsweise im Bereich von 85 bis 93 Gew.-% und bevorzugter im Bereich von 88 bis 92 Gew.-% basierend auf dem Gesamtgewicht der Polymerzusammensetzung liegt; und/oder
der Gehalt von Komponente B) in der Polymerzusammensetzung im Bereich von 6 bis 25 Gew.-%, vorzugsweise im Bereich von 7 bis 15 Gew.-% und bevorzugter im Bereich von 8 bis 12 Gew.-% basierend auf dem Gesamtgewicht der Polymerzusammensetzung liegt.

**8.** Polymerzusammensetzung nach einem der vorstehenden Ansprüche, **dadurch gekennzeichnet, dass**

die Polymerzusammensetzung die folgenden Komponenten umfasst, und vorzugsweise daraus besteht:

A) 65,0 bis 94,9 Gew.-% und vorzugsweise 84,0 bis 92,75 Gew.-%, basierend auf dem Gesamtgewicht der Polymerzusammensetzung, von einem statistischen $C_2C_3$-Copolymer; wobei das statistische $C_2C_3$-Copolymer aufweist

- einen Schmelzpunkt im Bereich von 110 bis 140°C und vorzugsweise im Bereich von 128 bis 135°C, bestimmt durch dynamische Differenzkalorimetrie gemäß ISO 11357-3;
- eine $MFR_2$ (230°C, 2,16 kg), bestimmt gemäß ISO 1133, im Bereich von 0,5 bis 4,0 g/10 Min., und vorzugsweise im Bereich von 1,0 bis 2,0 g/10 Min.; und
- einen C2-Gesamtgehalt im Bereich von 1 bis 10 Gew.-% und vorzugsweise im Bereich von 2,5 bis 5,5 Gew.-% basierend auf dem Gesamtgewicht des statistischen $C_2C_3$-Copolymers;

B) 5,0 bis 30,0 Gew.-% und vorzugsweise 7 bis 15 Gew.-% basierend auf dem Gesamtgewicht der Polymerzusammensetzung einer LDPE; wobei die LDPE aufweist

- eine Dichte, bestimmt gemäß ISO 1183, im Bereich von 915 bis 922 kg/$m^3$ und vorzugsweise im Bereich von 917 bis 921 kg/$m^3$; und
- eine $MFR_2$ (190°C, 2,16 kg), bestimmt gemäß ISO 1133 im Bereich von 0,9 bis 20,0 g/10 Min., und vorzugsweise im Bereich von 6,5 bis 10,0 g/10 Min.;

C) 0,1 bis 5,0 Gew.-% und vorzugsweise 0,25 bis 1,0 Gew.-% basierend auf dem Gesamtgewicht der Polymerzusammensetzung von Additiven, vorzugsweise aus der Gruppe ausgewählt bestehend aus Gleitmitteln, Säurefängern, UV-Stabilisatoren, Pigmenten, Antioxidantien, Trägern von Additiven, Nukleierungsmitteln und Gemischen davon;

unter der Voraussetzung, dass die Gewichtsproportionen von Komponenten A), B) und C) gemeinsam 100 Gew.-% ergeben.

**9.** Artikel, umfassend die Polymerzusammensetzung nach einem der Ansprüche 1 bis 8.

**10.** Artikel nach Anspruch 9, wobei der Artikel eine Blasfolie ist.

**11.** Blasfolie nach Anspruch 10, **dadurch gekennzeichnet, dass**

die Anfangsversiegelungstemperatur einer Blasfolie, die eine Dicke von 50 μm aufweist, im Bereich von 80°C bis unter 120°C, vorzugsweise im Bereich von 90°C bis 110°C und bevorzugter im Bereich von 98°C bis 105°C liegt; und/oder
die Kristallisationstemperatur ($T_C$) einer Blasfolie, die eine Dicke von 50 μm aufweist, bestimmt durch dynamische Differenzkalorimetrie gemäß ISO 11357-3, im Bereich von 80 bis 95°C und vorzugsweise im Bereich von 85 bis 90°C liegt; und/oder
die Blasfolie zwei Schmelzpunkte aufweist, wobei der erste Schmelzpunkt, bestimmt durch dynamische Differenzkalorimetrie gemäß ISO 11357-3, im Bereich von 110 bis 130°C, vorzugsweise im Bereich von 115 bis 125°C und bevorzugter im Bereich von 119 bis 121°C liegt, und der zweite Schmelzpunkt, bestimmt durch dynamische Differenzkalorimetrie gemäß ISO 11357-3, im Bereich von 100 bis 115°C, vorzugsweise im Bereich von 103 bis 112°C und bevorzugter im Bereich von 106 bis 108°C liegt.

**12.** Blasfolie nach Anspruch 10 oder 11, **dadurch gekennzeichnet, dass**

die Blasfolie ein Zugmodul, bestimmt gemäß ISO 527-3, bei 23°C an einer Blasfolie mit einer Dicke von 50 μm in Maschinenrichtung, sowie in Querrichtung im Bereich von 200 bis 1000 MPa, vorzugsweise im Bereich von 300 bis 700 MPa und bevorzugter im Bereich von 500 bis 600 MPa aufweist; und/oder
die Blasfolie eine Pfeilfall-Schlagfestigkeit, bestimmt gemäß ASTM D1709, Verfahren A an einer Blasfolie mit einer Dicke von 50 μm im Bereich von 20 bis 2000 g, vorzugsweise im Bereich von 40 bis 1000 g, bevorzugter im Bereich von 45 to 500 g, noch bevorzugter im Bereich von 50 bis 300 g und sogar noch bevorzugter im Bereich von 55 bis 80 g aufweist; und/oder
die Blasfolie eine Reißfestigkeit nach Elmendorf, bestimmt gemäß ISO 6383/2, in der Maschinenrichtung gemessen, im Bereich von 1,0 N/mm bis 50,0 N/mm, vorzugsweise im Bereich von 4,0 bis 20,0 N/mm und bevorzugter im Bereich von 6,0 bis 10,0 N/mm aufweist; und/oder
die Blasfolie eine Reißfestigkeit nach Elmendorf bestimmt gemäß ISO 6383/2, in der Querrichtung (TD) gemessen, im Bereich von 5,0 N/mm bis 100,0 N/mm, vorzugsweise im Bereich von 10,0 bis 40,0 N/mm und bevorzugter im Bereich von 15,0 bis 25,0 N/mm aufweist.

**13.** Blasfolie nach einem der Ansprüche 10 bis 12, **dadurch gekennzeichnet, dass** die Blasfolie eine Trübung, bestimmt gemäß ASTM D1003-00 an einer Blasfolie mit einer Dicke von 50 μm unter 4,2 %, vorzugsweise im Bereich von 0,1 bis 4,0 % und bevorzugter im Bereich von 0,5 bis 3,3 % aufweist.

**14.** Flexible Verpackungssysteme, ausgewählt aus Säcken oder Beuteln für Lebensmittel- und Pharmaverpackung, umfassend eine Blasfolie nach einem der Ansprüche 10 bis 13.

## Revendications

**1.** Composition de polymère comprenant au moins les composants suivants :

A) 70,0 à 95,0 % en poids, sur la base du poids total de la composition de polymère, d'un copolymère statistique en $C_2C_3$ ; selon lequel ledit copolymère statistique en $C_2C_3$ présente

- un point de fusion dans la plage de 110 à 140 °C déterminé par analyse calorimétrique différentielle selon l'ISO 11357-3 ;
- un $MFR_2$ (230 °C, 2,16 kg) déterminé selon l'ISO 1133 dans la plage de 0,5 à 4,0 g/10 min ; et
- une teneur totale en C2 dans la plage de 1 à 10 % en poids, sur la base du poids total du copolymère statistique en $C_2C_3$ ;

B) 5,0 à 30,0 % en poids, sur la base du poids total de la composition de polymère, d'un LDPE ; selon lequel ledit LDPE présente

- une masse volumique déterminée selon l'ISO 1183 dans la plage de 915 à 922 $kg/m^3$ ; et
- un $MFR_2$ (190 °C, 2,16 kg) déterminé selon l'ISO 1133 dans la plage de 0,9 à 20,0 g/10 min ;

à condition que les proportions en poids des composants A) et B) totalisent 100 % en poids.

**2.** Composition de polymère selon la revendication 1, **caractérisée en ce que**,

le composant A) est constitué de

a1) 50,0 à 85,0 % en poids d'une fraction polymère présentant

i) une teneur en $C_2$ dans la plage de 2,0 à moins de 5,5 % en poids, de préférence dans la plage de 2,0 à 5,49 % en poids ; et
ii) un indice de fluidité à l'état fondu $MFR_2$ (230 °C, 2,16 kg) déterminé selon l'ISO 1133 dans la plage de 0,5 à 5,0 g/10 min ; et

a2) 15,0 à 50,0 % en poids d'une fraction polymère présentant

i) une teneur en $C_2$ dans la plage de 5,5 à 10,0 % en poids ; et
ii) un indice de fluidité à l'état fondu $MFR_2$ (230 °C/2,16 kg) mesuré selon l'ISO 1133 dans la plage de 0,1 à 3,0 g/10 min ;

selon lequel ; l'indice de fluidité à l'état fondu $MFR_2$ (230 °C/2,16 kg) de la fraction polymère a2) est inférieur au $MFR_2$ (230 °C/2,16 kg) de la fraction polymère a1) ; et selon lequel
le composant A) présente de préférence

• un point de fusion dans la plage de 115 à 138 °C, de préférence dans la plage de 120 à 136 °C et plus préférentiellement dans la plage de 128 à 135 °C déterminé par analyse calorimétrique différentielle selon l'ISO 11357-3 ; et/ou
• une teneur totale en $C_2$ dans la plage de 1,5 à 8,0 % en poids, de préférence dans la plage de 2,0 à 7,0 % en poids et plus préférentiellement dans la plage de 2,5 à 5,5 % en poids, sur la base du poids total du composant A) ; et/ou
• un indice de fluidité à l'état fondu $MFR_2$ (230 °C/2,16 kg) mesuré selon l'ISO 1133 dans la plage de 0,7 à 3,5 g/10 min, de préférence dans la plage de 0,8 à 2,5 g/10 min et plus préférentiellement dans la plage de 1,0 à 2,0 g/10 min.

**3.** Composition de polymère selon la revendication 1 ou 2, **caractérisée en ce que**,
le composant A) présente

• une teneur en xylène soluble (XCS) déterminée selon l'ISO 16152, 1ed, 25 °C, sur la base du poids total du composant A), dans la plage de 0,5 à 15,0 % en poids, de préférence dans la plage de 1,0 à 10,0 % en poids et plus préférentiellement dans la plage de 2,5 à 4,5 % en poids ; et/ou
• une teneur en motifs provenant de comonomères différents de l'éthylène et du propylène inférieure à 7 % en poids, de préférence dans la plage de 0 à 3 % en poids, sur la base du poids total du composant A), plus préférentiellement dans la plage de 0,1 à 3 % en poids et encore plus préférentiellement le composant A) est constitué de motifs provenant de l'éthylène et du propylène ; et/ou
• une température de transition vitreuse dans la plage de -20 à 0 °C et de préférence dans la plage de -10 et -1 °C déterminée par analyse calorimétrique différentielle selon l'ISO 11357-2.

**4.** Composition de polymère selon l'une quelconque des revendications précédentes, **caractérisée en ce que**,
le composant A) peut être obtenu, de préférence est obtenu, en présence d'un catalyseur à métallocène, de préférence ledit catalyseur à métallocène comprend

i) un complexe de formule (I) :

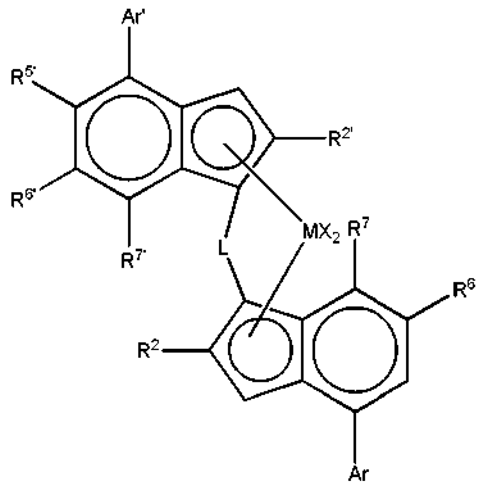

dans laquelle M est un zirconium ou un hafnium ;
chaque X est un ligand sigma ;
L est un pont divalent sélectionné parmi $-R'_2C-$, $-R'_2C-CR'_2-$, $-R'_2Si-$, $-R'_2Si-SiR'_2-$, $-R'_2Ge-$, dans laquelle chaque R' est indépendamment un atome d'hydrogène, un hydrocarbyle en $C_1-C_{20}$, un tri(alkyle en $C_1-C_{20}$)silyle, un aryle en $C_6-C_{20}$, un arylalkyle en $C_7-C_{20}$ ou un alkylaryle en $C_7-C_{20}$ ;
$R^2$ et $R^{2'}$ sont chacun indépendamment un radical hydrocarbyle en $C_1-C_{20}$ contenant facultativement un ou plusieurs hétéroatomes des groupes 14 à 16 ;
$R^{5'}$ est un groupe hydrocarbyle en $C_{1-20}$ contenant un ou plusieurs hétéroatomes des groupes 14 à 16 facultativement substitué avec un ou plusieurs atomes halo ;
$R^6$ et $R^{6'}$ sont chacun indépendamment un hydrogène ou un groupe hydrocarbyle en $C_{1-20}$ contenant facultativement un ou plusieurs hétéroatomes des groupes 14-16 ; dans laquelle $R^{6'}$ est de préférence un groupe alkyle tertiaire ;
$R^7$ est un hydrogène ou un groupe hydrocarbyle en $C_{1-20}$ contenant facultativement un ou plusieurs hétéroatomes des groupes 14-16 et $R^{7'}$ est un hydrogène ;
Ar et Ar' sont chacun indépendamment un groupe aryle ou hétéroaryle présentant jusqu'à 20 atomes de carbone facultativement substitué avec un ou plusieurs groupes $R^1$ ;
chaque $R^1$ est un groupe hydrocarbyle en $C_{1-20}$ ou deux groupes $R^1$ sur des atomes de carbone adjacents pris ensemble peuvent former un cycle non aromatique condensé à 5 ou 6 chaînons avec le groupe Ar ou Ar', ledit cycle étant lui-même facultativement substitué avec un ou plusieurs groupes $R^4$ ; chaque $R^4$ est un groupe hydrocarbyle en $C_{1-20}$; et

(ii) un cocatalyseur comprenant au moins un ou deux composés d'un métal du groupe 13, de préférence un composé d'Al et/ou de bore.

**5.** Composition de polymère selon l'une quelconque des revendications précédentes, **caractérisée en ce que**, le composant B) présente

- un $MFR_2$ (190 °C, 2,16 kg) déterminé selon l'ISO 1133 dans la plage de 2,0 à 15,0 g/10 min, de préférence dans la plage de 4,0 à 12,0 g/10 min et plus préférentiellement dans la plage de 6,5 à 10,0 g/10 min ; et/ou
- une masse volumique déterminée selon l'ISO 1183 dans la plage de 916 à 922 $kg/m^3$, de préférence dans la plage de 917 à 921 $kg/m^3$ et plus préférentiellement est de 920 $kg/m^3 kg/m^3$ ; et/ou
- une teneur en substances solubles dans l'hexane déterminée sur un film coulé d'une épaisseur de 100 $\mu m$ selon le FDA 177.1520 dans la plage de 0 à 10,0 % en poids, de préférence dans la plage de 0 à 5,0 % en poids et plus préférentiellement dans la plage de 0 à 1 % en poids, sur la base du poids total du composant B) ; et/ou
- un point de fusion déterminé par analyse calorimétrique différentielle selon l'ISO 11357-3 dans la plage de 90 à 120 °C, de préférence dans la plage de 95 à 115 °C, plus préférentiellement dans la plage de 100 à 115 °C et encore plus préférentiellement dans la plage de 107 à 110 °C.

**6.** Composition de polymère selon l'une quelconque des revendications précédentes, **caractérisée en ce que**, la composition de polymère comprend au moins un additif C), de préférence sélectionné dans le groupe consistant

en les agents de glissement, les piégeurs d'acide, les stabilisants anti-UV, les pigments, les antioxydants, les supports d'additif, les agents de nucléation et les mélanges de ceux-ci, selon lequel ces additifs sont de préférence présents à 0,1 à 5,0 % en poids et plus préférentiellement à 0,1 à 4,0 % en poids, sur la base du poids total de la composition de polymère.

**7.** Composition de polymère selon l'une quelconque des revendications précédentes, **caractérisée en ce que**,

la teneur en composant A) dans la composition de polymère est dans la plage de 75 à 94 % en poids, de préférence dans la plage de 85 à 93 % en poids et plus préférentiellement dans la plage de 88 à 92 % en poids, sur la base du poids total de la composition de polymère ; et/ou
la teneur en composant B) dans la composition de polymère est dans la plage de 6 à 25 % en poids, de préférence dans la plage de 7 à 15 % en poids et plus préférentiellement dans la plage de 8 à 12 % en poids, sur la base du poids total de la composition de polymère.

**8.** Composition de polymère selon l'une quelconque des revendications précédentes, **caractérisée en ce que**,

la composition de polymère comprend et de préférence est constituée des composants suivants :

A) 65,0 à 94,9 % en poids et de préférence 84,0 à 92,75 % en poids, sur la base du poids total de la composition de polymère, d'un copolymère statistique en $C_2C_3$ ; selon lequel ledit copolymère statistique en $C_2C_3$ présente

• un point de fusion dans la plage de 110 à 140 °C et de préférence dans la plage de 128 à 135 °C déterminé par analyse calorimétrique différentielle selon l'ISO 11357-3 ;
• un $MFR_2$ (230 °C, 2,16 kg) déterminé selon l'ISO 1133 dans la plage de 0,5 à 4,0 g/10 min et de préférence dans la plage de 1,0 à 2,0 g/10 min ; et
• une teneur totale en C2 dans la plage de 1 à 10 % en poids et de préférence dans la plage de 2,5 à 5,5 % en poids sur la base du poids total du copolymère statistique en $C_2C_3$ ;

B) 5,0 à 30,0 % en poids et de préférence 7 à 15 % en poids, sur la base du poids total de la composition de polymère, d'un LDPE ; selon lequel ledit LDPE présente

• une masse volumique déterminée selon l'ISO 1183 dans la plage de 915 à 922 kg/$m^3$ et de préférence dans la plage de 917 à 921 kg/$m^3$ ; et
• un $MFR_2$ (190 °C, 2,16 kg) déterminé selon l'ISO 1133 dans la plage de 0,9 à 20,0 g/10 min, de préférence dans la plage de 6,5 à 10,0 g/10 min ;

C) 0,1 à 5,0 % en poids et de préférence de 0,25 à 1,0 % en poids, sur la base du poids total de la composition de polymère, d'additifs sélectionnés de préférence dans le groupe consistant en les agents de glissement, les piégeurs d'acide, les stabilisants anti-UV, les pigments, les antioxydants, les supports d'additif, les agents de nucléation et les mélanges de ceux-ci ;

à condition que les proportions en poids des composants A), B) et C) totalisent 100 % en poids.

**9.** Article comprenant la composition de polymère selon l'une quelconque des revendications 1 à 8.

**10.** Article selon la revendication 9, dans lequel l'article est un film soufflé.

**11.** Film soufflé selon la revendication 10, **caractérisée en ce que**,

la température d'initiation de scellage d'un film soufflé présentant une épaisseur de 50 $\mu$m est dans la plage de 80 °C à moins de 120 °C, de préférence dans la plage de 90 °C à 110 °C et plus préférentiellement dans la plage de 98 °C à 105 °C ; et/ou
la température de cristallisation ($T_c$) d'un film soufflé présentant une épaisseur de 50 $\mu$m déterminée par analyse calorimétrique différentielle selon l'ISO 11357-3 est dans la plage de 80 à 95 °C et de préférence dans la plage de 85 à 90 °C ; et/ou
le film soufflé présente deux points de fusion, dans lequel le premier point de fusion déterminé par analyse calorimétrique différentielle selon l'ISO 11357-3 est dans la plage de 110 à 130 °C, de préférence dans la plage

de 115 à 125 °C et plus préférentiellement dans la plage de 119 à 121 °C et le second point de fusion déterminé par analyse calorimétrique différentielle selon l'ISO 11357-3 est dans la plage de 100 à 115 °C, de préférence dans la plage de 103 à 112 °C et plus préférentiellement dans la plage de 106 à 108 °C.

**12.** Film soufflé selon la revendication 10 ou 11, **caractérisée en ce que**,

le film soufflé présente un module de traction déterminé selon l'ISO 527-3 à 23 °C sur un film soufflé d'une épaisseur de 50 μm dans le sens machine ainsi que dans le sens transversal dans la plage de 200 à 1000 MPa, de préférence dans la plage de 300 à 700 MPa et plus préférentiellement dans la plage de 500 à 600 MPa ; et/ou

le film soufflé présente une résistance à l'impact d'une chute de fléchette déterminée selon l'ASTM D1709, méthode A, sur un film soufflé d'une épaisseur de 50 μm dans la plage de 20 à 2000 g, de préférence dans la plage de 40 à 1000 g, plus préférentiellement dans la plage de 45 à 500 g, encore plus préférentiellement dans la plage de 50 à 300 g et même encore plus préférentiellement dans la plage de 55 à 80 g ; et/ou

le film soufflé présente une résistance à la déchirure Elmendorf déterminée selon l'ISO 6383/2 mesurée dans le sens machine dans la plage de 1,0 N/mm à 50,0 N/mm, de préférence dans la plage de 4,0 à 20,0 N/mm et plus préférentiellement dans la plage de 6,0 à 10,0 N/mm ; et/ou

le film soufflé présente une résistance à la déchirure Elmendorf déterminée selon l'ISO 6383/2 mesurée dans le sens transversal (TD) dans la plage de 5,0 N/mm à 100,0 N/mm, de préférence dans la plage de 10,0 à 40,0 N/mm et plus préférentiellement dans la plage de 15,0 à 25,0 N/mm.

**13.** Film soufflé selon l'une quelconque des revendications 10 à 12, **caractérisé en ce que**,
le film soufflé présente un trouble déterminé selon l'ASTM D1003-00 sur un film soufflé d'une épaisseur de 50 μm inférieur à 4,2 %, de préférence dans la plage de 0,1 à 4,0 % et plus préférentiellement dans la plage de 0,5 à 3,3 %.

**14.** Systèmes d'emballages souples, sélectionnés parmi les sacs ou sachets pour emballages alimentaires et pharmaceutiques comprenant un film soufflé selon l'une quelconque des revendications 10 à 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9742258 A1
- EP 1813423 A1
- EP 1831016 A2
- EP 19177302
- EP 0887379 A1
- WO 9212182 A1
- WO 2004000899 A1
- WO 2004111095 A1
- WO 9924478 A1
- WO 9924479 A1
- WO 0068315 A1
- WO 2018122134 A1
- WO 2013007650 A1


### Non-patent literature cited in the description


- *CHEMICAL ABSTRACTS,* 6683-19-8
- *CHEMICAL ABSTRACTS,* 31570-04-4
- *CHEMICAL ABSTRACTS,* 693- 36-7
- *CHEMICAL ABSTRACTS,* 52829-07-9
- *CHEMICAL ABSTRACTS,* 1843-05-6
- *CHEMICAL ABSTRACTS,* 532-32-1
- *CHEMICAL ABSTRACTS,* 135861-56-2
- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150
- *CHEMICAL ABSTRACTS,* 6683-19-4